(19) Europäisches Patentamt / European Patent Office / Office européen des brevets

(11) **EP 2 799 794 B1**

(12) **EUROPEAN PATENT SPECIFICATION**

(45) Date of publication and mention
of the grant of the patent:
**08.05.2019 Bulletin 2019/19**

(21) Application number: **11878666.4**

(22) Date of filing: **29.12.2011**

(51) Int Cl.:
*F24S 23/71* (2018.01)      *F24S 23/72* (2018.01)
*F24S 23/74* (2018.01)      *F24S 23/79* (2018.01)
*F24S 23/77* (2018.01)      *F24S 20/20* (2018.01)

(86) International application number:
**PCT/RU2011/001042**

(87) International publication number:
**WO 2013/100780 (04.07.2013 Gazette 2013/27)**

(54) **APPARATUS FOR CONCENTRATING ENERGY**

VORRICHTUNG ZUR ENERGIEKONZENTRATION

DISPOSITIF DE CONCENTRATION D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.11.2014 Bulletin 2014/45**

(73) Proprietor: **Quantrill Estate Inc.
Tortola (VG)**

(72) Inventor: **KOMRAKOV, Evgeny Vyacheslavovich
St.Petersburg 198147 (RU)**

(74) Representative: **Bucher, Ralf Christian
Patentanwalt Dipl.-Ing.
Alte Landstrasse 23
85521 Ottobrunn (DE)**

(56) References cited:
WO-A1-95/15465        WO-A2-2011/153337
DE-A1-102008 010 314   ES-A1- 2 157 179
RU-C1- 2 034 204        RU-C2- 2 188 987
US-A- 4 000 733         US-A1- 2007 062 195
US-A1- 2010 263 709     US-A1- 2010 319 678
US-A1- 2011 067 688     US-A1- 2011 100 456
US-A1- 2011 253 128

• **RICHTER J L: "Optics of a two-trough solar
concentrator", SOLAR ENERGY, PERGAMON
PRESS. OXFORD, GB, vol. 56, no. 2, 1 February
1996 (1996-02-01), pages 191-198, XP004003212,
ISSN: 0038-092X, DOI:
10.1016/0038-092X(95)00091-5**

## Description

Field of the invention

The present invention relates to solar-energy engineering and can find application in solar power plants of the kind of "tracking saucer", "pan" and "solar tower" and in other similar systems.

Background of the invention

The background of the invention discloses various devices designed to concentrate solar energy.

In particular, one can mention a solar heater described in the Author's certificate SU 1615484, published on 23.12.1990, comprising a fixed semispherical reflector and a fixed heat absorber. A drawback of this technical solution resides in its low efficiency.

Another solar energy concentrator is disclosed in the Author's certificate SU 1347068, published on 23.10.1987, comprising a main and an additional concentrators and an energy converter. The drawbacks of this technical solution are its technological and operational complexity as well as its poor efficiency.

A solar energy concentrator with the features of the preamble of claim 1 is disclosed in the international patent application publication WO2011/153337A2. Solar concentrators with flat mirrors forming a main concentrator are disclosed in the German patent application publication DE 10 2008 010 314 A1 and the US patent application publication US 2007/0062195 A1. The US patent application publication US 2011/0067688 A1 discloses a solar energy concentrator with at least one stationary main concentrator including a generally curved optical surface capable of reflecting solar irradiation as primary concentrated solar radiation, wherein the primary concentrators can include an optical surface with a saw-tooth contour or an optical surface with refractive properties. The US patent application publication US 2010/263709 A1 describes a solar energy concentrator with a simpler adjustable-focal-length Fresnel focusing mirror with a single focal length.

Summary

The task to be solved by the present invention consists to simplify the design of a device for concentrating energy such as a solar energy concentrator and to reduce its cost as well as to increase its efficiency.

This task is solved by the present invention as defined by claim 1. Further embodiments of the invention are defined in the dependent claims.

The technical result obtained by the application of the present invention consists to improve the accessibility of the technology, to simplify the adjustment and to avoid existing strict limitations as to the size of the mirror system.

Said technical result is achieved thanks to the fact that a device for concentrating energy comprising a main concentrator and an energy converter comprises an additional concentrator mounted in the focal zone of the main concentrator, the energy converter being mounted in the focal zone of the additional concentrator, whereas the additional concentrator is designed as a segment of a concave cylindrical or spherical surface. At the same time, the main concentrator is made as a collection of flat mirrors oriented in a way to let the reflected ray axis pass through the center of the sphere or by the cylinder axis of the additional concentrator, and the energy converter can be made as a heat exchanger or as a distributed system of active or passive elements. The flat mirrors can be mounted at an angle to the horizon, equal to the half geographic latitude of the device location site.

Besides, the main concentrator surface supporting the flat mirrors is made spherical or cylindrical, with a radius equal to a double distance between its surface to the sphere center or to the cylinder axis of the additional concentrator.

Said technical result is achieved as well thanks to the fact that the heat exchanger can be comprised of at least two parts and can be made as a spherical ring or an annular spherical plate.

As separate mirror systems, use is generally made of common flat mirrors that are many times cheaper and more easily available than spherical parabolic mirrors. As an energy concentrator located on a tower, use is made of a mirror under the form of a truncated sphere segment or a truncated cylinder. The flat mirrors are oriented in such a way to let the reflected ray axis pass through the center of the concentrator sphere or by the cylinder axis of the additional concentrator. At the same time, the formation of the focal zone of the spherical or cylindrical concentrator does not depend on the location precision of the system flat mirrors, as to the distance and to their horizontal position. It is necessary to provide an accurate adjustment of flat mirrors only in relation to the angles. It enables to build any location configuration of the flat mirrors, for example, their plane disposition, in comparison with the spherical mirrors disposition that should be performed with a very high precision as to the focal point of the system in relation to the angles, to the horizontal position and to the distance to the focus. The most efficient configuration for the disposition of the flat mirrors on the main concentrator, from the point of view of simplicity, of their adjustment precision in relation to the angles and their attachment will be to place them on the sphere or the cylinder, the radius of which will be equal to a double distance from the surface of this spherical or cylindrical surface to the sphere center or to the cylinder axis of the additional concentrator.

Brief description of the drawings

The invention is illustrated by some drawings where:

Fig. 1 shows the general view of the power plant structure, in the case of a "tracking saucer";

Fig. 2 is a general view of the device, a "tracking saucer"- type, with the annular disposition of the flat mirrors and with a heat exchanger made as a spherical ring;

Fig. 3 is a diagrammatic representation of the device, a side view;

Fig. 4 shows the view A of Fig. 3;

Fig. 5 is a general view of the "pan"-type device;

Fig. 6 is a general view of the "pan"-type device with the mirrors turned at an angle equal to a half geographic latitude of the device location site;

Fig. 7 is a general view of the "pan"-type device with the flat mirrors located on the pan edges and with a heat exchanger made of two parts, each of them being in the form of a part of a volumetric cylinder;

Fig. 8 is a general view of a "solar tower"-type device with an additional spherical concentrator mounted on the tower, and with a small-sized heat exchanger;

Fig. 9 is a drawing to explain the calculation of the focal distance.

Embodiments of the invention

In the application of the claimed device for concentrating solar radiation, it is advisable to use common, available flat mirrors sized from 0.1x0.1 m to 4x4 m to be mounted onto a sphere with a radius from 1 to 100 m or onto a cylinder with a width of 5 to 100 m. It is advisable to use a spherical or cylindrical concentrator with the radius of 0.2 to 10 m and with the size of 0.4 to 20 meters and more.

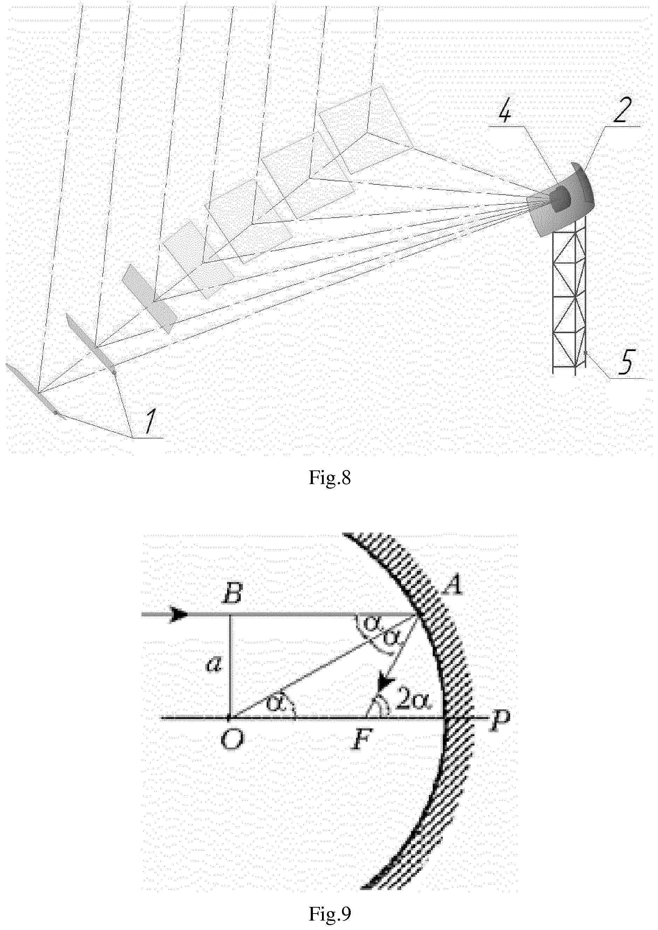

Fig. 9 is a drawing to explain the calculation of the focal distance FP for a concave spherical or cylindrical concentrator with the radius R for a beam falling onto the concentrator in parallel with the main optical axis, at a distance "a" from the same. The geometrical configuration of the job is made clear by the Figure. In an isosceles triangle AOF it is easy to express the side OF through the base OA = R, and the neighboring angle α:

$$OF = \frac{R}{2\cos\alpha}.$$

From the right-angled triangle OBA one can find:

$$\cos\alpha = \frac{AB}{R} = \frac{\sqrt{R^2 - a^2}}{R}.$$

Then $OF = \dfrac{R^2}{2\sqrt{R^2 - a^2}}$.

The unknown focal distance from the point F to the pole P:

$$FP = R - OF = R\left(1 - \frac{R}{2\sqrt{R^2 - a^2}}\right).$$

This equation is for the focal zone of the spherical or cylindrical concentrator. The more the distance "a" from the axis to the parallel beam, the farther the focus moves to the concentrator. In the case of a concentrator with R = 1.5 m for "a" = 0.5 m, the displacement of the focus will be 3.0 cm, and for "a" =1.0 m the focus displacement will be 25.4 cm. The maximum distance from the axis to the last parallel beam "a" will be 1.0 m, since the size of the flat mirror is 2x2 m. The calculations provided are carried out for one main optical axis. Since the question is of a sphere or a cylinder, there can be a multitude of main optical axes from the sphere or cylinder center to the surface in the limits of the concentrator angular aperture.

Thus, the radiation of all the flat mirrors sized 2x2 m onto a portion of the same size of the additional spherical or cylindrical concentrator, through its center, in the limits of its angular aperture enables to form a volumetric spherical or cylindrical zone starting at the distance R/2 from the additional concentrator and with the depth of 25.4 cm to the concentrator side. The radiation concentration will be maximal at the distance R/2 from the additional concentrator. From the center, at a distance from the additional concentrator of more than R/2, no concentrated radiation will be observed. From the additional concentrator side, at a distance lower than 25.4 cm to the last, no concentrated radiation will be observed either.

In this case, the focal zone of the additional spherical or cylindrical concentrator will have an internal curvature R=0.75 m and the depth of 0.254 m, where a spherical or cylindrical heat exchanger could be mounted.

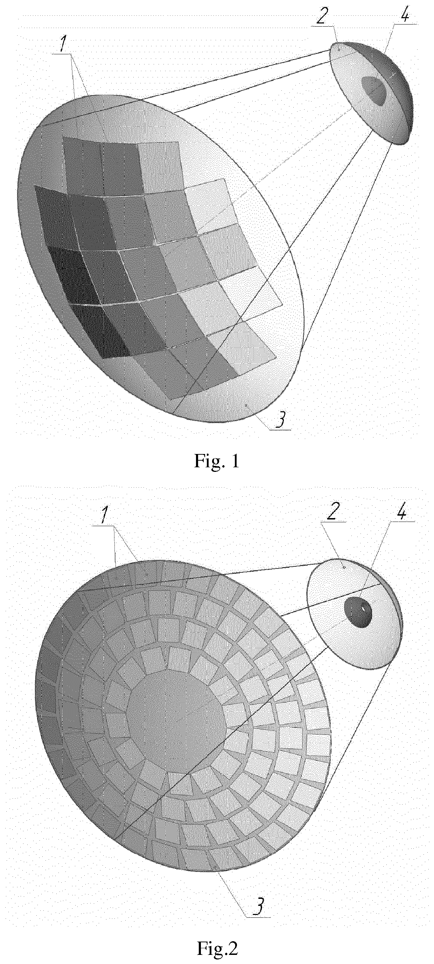

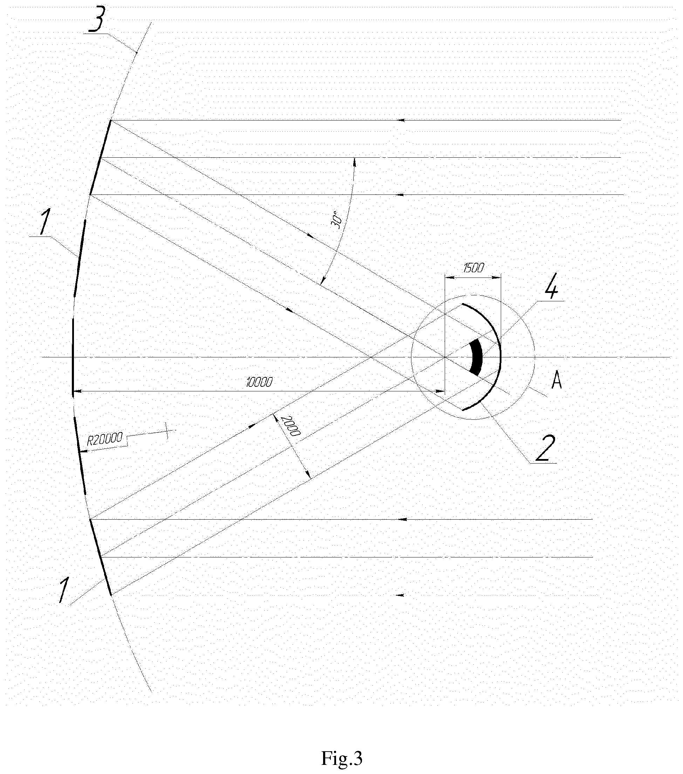

1. A "Tracking saucer"-type power plant (Figs. 1-4).

The device disclosed in the present invention considers the sizes of plates to mount flat mirrors with a diameter from 10 to 40 meters and more. In the existing "Tracking saucer"-type power plants, the mirror diameter, as a rule, does not exceed 12 meters.

For these sizes and for the number of flat mirrors from 20 to 300, the number of optical axes will be as well from 20 to 300.

The device operates as follows. Flat common mirrors 1 mounted opposite an additional spherical concentrator 2 on a working antenna field of a main concentrator 3 with a radius equal to a double distance from the sphere surface to the additional concentrator center, and oriented in such a way to let the reflected beam axis of each mirror pass through the center of the additional concentrator sphere, reflect the solar light. Considering the high number of the main concentrator mirrors, the whole energy is concentrated in the focal zone of an additional spherical concentrator 4, where a heat exchanger is mounted.

For an additional spherical concentrator radius of 1.5 m, the heat exchanger volume will be up to 140 liters. Taking into consideration that this volume can be the object of the effect of 80 to 1200 m$^2$ of active reflecting surface, the volumetric character of the focal zone becomes an advantage, compared to a point, in the case of a parabola. A part of the flat mirror energy, from 18 to 25%, will be concentrated directly on this volume located in the focal zone, the remaining part of energy being concentrated on the same volume by the additional spherical concentrator, but from the other side.

In the case if no mirrors are disposed in the spherical surface center of the main concentrator, there is a possibility to make the construction of the heat exchanger as a volumetric spherical ring (Fig. 2), which will reduce its volume.

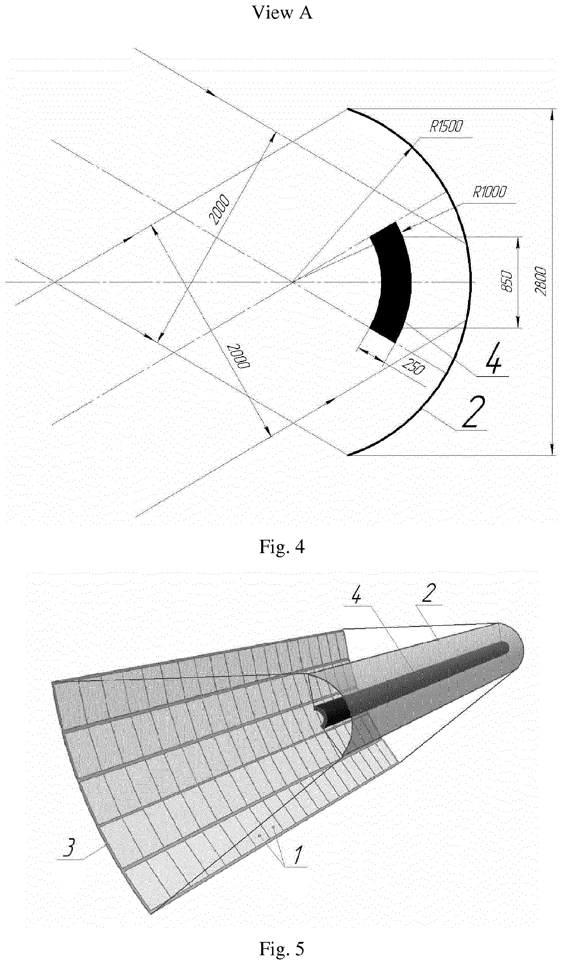

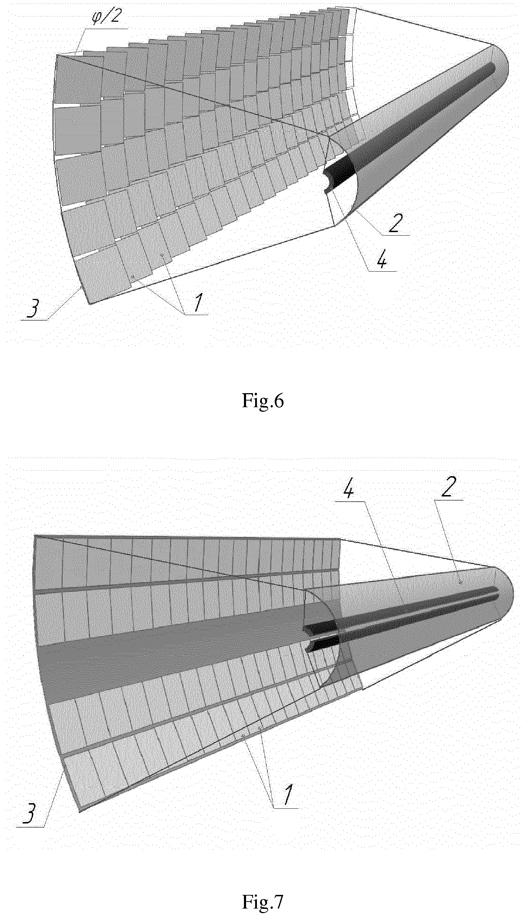

2. Cylindrical "pan"-type power plant (Figs. 5-7).

The device according to the present invention can be used as well in electric power plants with mirrors in the form of a cylindrical parabolic pan. Then, instead of a cylindrical parabola, the main concentrator 3 under the form of a cylinder 3 with the radius of curvature equal to a double distance from the cylinder surface to the center of the additional concentrator is mounted. Instead of mirrors with a parabolic form, flat mirrors 1 are mounted with a size, for example, of 2x2 m, that are oriented in such a way to let the reflected beam axis pass through the cylinder axis of the additional concentrator 2. The additional concentrator is of a cylindrical form with the radius of 1.5 m. The heat exchanger 4 has as well a cylindrical form with an internal radius of 0.75 m and a thickness of up to 25.4 cm. The volume of liquid in the heat exchanger can be of up to 150 1 per running meter. In the case of using mirrors with the size of 1x2 - 4 m, the size of the additional concentrator and of the heat exchanger can be reduced by two times. Then, for the same size of the general mirror system in the main concentrator, the volume of liquid in one running meter of the heat exchanger will be of up to 40 1.

The width of the main concentrator under the form of a cylindrical pan comprised of flat mirrors can be from 10 m to 40 m and more. In the known projects, the width of the pans, as a rule, is not more than 6-8 m.

Since in the present system the arrangement of the flat mirrors 1 does not depend on the distance to the additional concentrator, all the individual mirrors can be arranged in the pan not in a parallel way to the surface of the Earth, but at an angle to the horizon, equal to the half of the geographic latitude of the device location site. In this case, solar radiation will fall perpendicular to the heat exchanger plus-minus 23°, which will increase the efficiency of the whole system, in particular in winter time, and at the device location in latitudes higher than 30°.

In some cases, the flat mirrors are mounted only on the edges of the main concentrator in the form of a cylindrical pan, and at the shaded side (in the cylinder center), no mirrors will be placed. In this case, the heat exchanger is made as a volumetric cylinder comprised of two separate parts.

3. "Solar tower"-type electric power plant (Fig. 8).

In the case of mounting a concentrator 5 under the form of a truncated segment of the spherical surface 2 onto the tower, while orienting the flat mirrors 1 in such a way to let the reflected beam axis pass through the sphere center of the additional concentrator 2, one can either increase by several times the area of every individual, computer-controlled flat mirror 1, or reduce rather sharply the area and the volume of the heat exchanger 4.

In this case, the spherical additional concentrator can collect solar light from a plurality of mirrors with a large area in a sector of up to 120°.

With this, taking into consideration that the flat mirrors can take horizontally a sector of up to 120°, and vertically of maximum 45°, it is advisable to build the additional concentrator in the form of a truncated part of a spherical surface extended horizontally and limited in size vertically. Then, respectively, the heat exchanger volume will be substantially reduced.

**Claims**

1. A device for concentrating energy, particularly solar light, comprising a main concentrator (3), an energy converter (4), and an additional concentrator (2) mounted in the focal zone of the main concentrator (3),
   wherein
   the energy converter (4) is made as a heat exchanger and mounted in the focal zone of the additional concentrator (2),
   and wherein
   the additional concentrator (2) is designed as a segment of a concave cylindrical or spherical surface, and wherein the main concentrator (3) is made as a collection of flat mirrors (1) oriented in a way to let the reflected ray axis of each mirror pass through the center of the sphere of the additional concentrator (2) or through the cylinder axis of the additional concentrator (2),
   and wherein
   the energy converter (4) is arranged between the main concentrator (3) and the additional concentrator (2) such that a part of the energy reflected from the flat mirrors (1) is concentrated directly on one side of the volume of the energy converter (4) and the remaining part of said energy is concentrated on the other side of said volume by the additional concentrator (2),

**characterized in that**

the surface of the main concentrator (3) supporting the flat mirrors (1) is made spherical or cylindrical, with a radius equal to a double distance between its surface and the sphere center or the cylinder axis of the additional concentrator (2).

2. The device of claim 1, wherein the heat exchanger is composed of two parts at least.

3. The device of claim 1, wherein the heat exchanger is made as a spherical ring or an annular spherical plate.

## Patentansprüche

1. Vorrichtung zum Konzentrieren von Energie, insbesondere von Solarlicht, umfassend einen Hauptkonzentrator (3), einen Energiewandler (4) und einen zusätzlichen Konzentrator (2), der in der Fokuszone des Hauptkonzentrators (3) montiert ist,

wobei der Energiewandler (4) als Wärmetauscher ausgeführt und in der Fokuszone des zusätzlichen Konzentrators (2) montiert ist, und

wobei der zusätzliche Konzentrator (2) als ein Segment einer konkaven zylindrischen oder sphärischen Oberfläche ausgebildet ist,

und wobei der Hauptkonzentrator (3) als eine Sammlung von flachen Spiegeln (1) ausgebildet ist, die so ausgerichtet sind, dass die reflektierte Strahlenachse jedes Spiegels durch das Zentrum der Kugel des zusätzlichen Konzentrators (2) oder durch die Zylinderachse des zusätzlichen Konzentrators (2) hindurchgeht,

und wobei der Energiewandler (4) zwischen dem Hauptkonzentrator (3) und dem zusätzlichen Konzentrator (2) so angeordnet ist, dass ein Teil der von den flachen Spiegeln (1) reflektierten Energie direkt auf einer Seite des Volumens des Energiewandlers (4) konzentriert wird und der verbleibende Teil der Energie auf der anderen Seite des Volumens durch den zusätzlichen Konzentrator (2) konzentriert wird,

**dadurch gekennzeichnet, dass**

die Oberfläche des Hauptkonzentrators (3), der die flachen Spiegel (1) trägt, kugelförmig oder zylindrisch ausgebildet ist, mit einem Radius, der gleich einem doppelten Abstand zwischen seiner Oberfläche und dem Kugelmittelpunkt oder der Zylinderachse des zusätzlichen Konzentrators (2) ist.

2. Vorrichtung nach Anspruch 1, wobei der Wärmetauscher aus mindestens zwei Teilen besteht.

3. Vorrichtung nach Anspruch 1, wobei der Wärmetauscher als Kugelring oder als ringförmige Kugelplatte ausgeführt ist.

## Revendications

1. Dispositif pour concentrer de l'énergie, en particulier de la lumière solaire, comprenant un concentrateur principal (3), un convertisseur d'énergie (4), et un concentrateur supplémentaire (2) monté dans la zone focale du concentrateur principal (3),

dans laquelle le convertisseur d'énergie (4) est réalisé sous la forme d'un échangeur de chaleur et monté dans la zone focale du concentrateur supplémentaire (2), et

dans laquelle le concentrateur supplémentaire (2) est conçu comme un segment d'une surface cylindrique ou sphérique concave,

et dans lequel le concentrateur principal (3) est réalisé sous la forme d'un ensemble de miroirs plats (1) orientés de manière à laisser passer l'axe de rayon réfléchi de chaque miroir par le centre de la sphère du concentrateur supplémentaire (2) ou par l'axe du cylindre du concentrateur supplémentaire (2),

et dans lequel le convertisseur d'énergie (4) est agencé entre le concentrateur principal (3) et le concentrateur supplémentaire (2) de telle sorte qu'une partie de l'énergie réfléchie par les miroirs plats (1) est concentrée directement sur un côté du volume du convertisseur d'énergie (4) et le reste de ladite énergie est concentré sur l'autre côté dudit volume par le concentrateur supplémentaire (2),

**caractérisé en ce que**

la surface du concentrateur principal (3) supportant les miroirs plats (1) est rendue sphérique ou cylindrique, avec un rayon égal à une double distance entre sa surface et le centre de la sphère ou l'axe cylindrique du concentrateur supplémentaire (2).

2. Dispositif selon la revendication 1, dans lequel l'échangeur de chaleur est composé de deux parties au moins.

3. Dispositif selon la revendication 1, dans lequel l'échangeur de chaleur est réalisé sous la forme d'un anneau sphérique ou d'une plaque sphérique annulaire.

Fig. 1

Fig.2

Fig.3

View A

Fig. 4

Fig. 5

Fig.6

Fig.7

Fig.8

Fig.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SU 1615484
- SU 1347068
- WO 2011153337 A2
- DE 102008010314 A1
- US 20070062195 A1
- US 20110067688 A1
- US 2010263709 A1